# EUROPEAN PATENT APPLICATION

(11) **EP 2 278 824 A1**
(43) Date of publication of application: **26.01.2011**
(21) Application number: 10766837.8
(22) Date of filing: 20.04.2010
(51) Int. Cl.: H04N 13/04, G09G 5/00, G09G 5/36, G09G 5/377, H04N 7/173

(54) **VIDEO PROCESSING APPARATUS AND VIDEO PROCESSING METHOD**

(30) Priority: 21.04.2009 JP 2009102584
(71) Applicant: Panasonic Corporation, Kadoma-shi Osaka 571-8501 (JP)
(72) Inventor: TAKATORI, Masahiro, Osaka-shi, Osaka 540-6207 (JP); SUZUKI, Satoshi, Osaka-shi, Osaka 540-6207 (JP); KASE, Daisuke, Osaka-shi, Osaka 540-6207 (JP); GOTANDA, Chikara, Osaka-shi, Osaka 540-6207 (JP)
(74) Representative: Grünecker, Kinkeldey, Stockmair & Schwanhäusser Anwaltssozietät
(86) International application number: PCT/JP2010/002832
(87) International publication number: WO 2010/122775

(57) **Abstract**

An image processor includes a 3D image output section for outputting a 3D image; an average parallax calculator for calculating a parallax level of each target pixel based on a lefty-eye image and a right-eye image, and calculating an average screen parallax level based on the parallax level; a data acquisition section for detecting the type of 3D image or a characteristic of synthesized image; a correcting and synthesizing section for correcting the average screen parallax level depending on the type of 3D image or the characteristic of synthesized image, setting a corrected average parallax level as parallax to be added to the caption or OSD, adding the parallax to the caption or OSD, and synthesizing a caption or OSD with parallax; and an image synthesizer for superimposing the caption or OSD synthesized image with parallax on the 3D image.

## Description

### TECHNICAL FIELD

The present invention relates to image processors and image processing methods for displaying a caption or OSD (On Screen Display) with parallax on a 3D display unit. More particularly, the present invention relates to image processors and image processing method in which parallax of caption or OSD is generated based on average screen parallax of 3D image, contents information, and alpha blending value. Then, based on this generated parallax, a caption or OSD with parallax is superimposed on a 3D image.

### BACKGROUND ART

A prior art is disclosed related to a ticker display device that can display tickers including emergency information on a screen while watching a stereoscopic broadcast program. In addition, a method is disclosed related to generation of tickers for stereoscopic view without disturbing an overall stereoscopic effect by recognizing objects in stereoscopic image. (For example, refer to Patent Literature 1 and Patent Literature 2.)

In accordance with the above-mentioned prior art, tickers for stereoscopic view are generated by detecting objects in image information, regardless of types of 3D images. Since tickers do not support types of 3D images, such as program contents that the viewer watches, tickers are not displayed on appropriate positions depending on program contents.

### [Citation List]

### [Patent Literature]

[PTL 1] Patent No. 3423189
[PTL 2] Unexamined Japanese Patent Publication No. 2006-325165
[PTL 2] Unexamined Japanese Patent Publication No. H1-93986

### SUMMARY OF THE INVENTION

An image processor of the present invention includes a 3D image output section, average parallax calculator, data acquisition section, corrector, and image synthesizer.

The 3D image output section outputs a 3D image with parallax between a left-eye image and a right-eye image. The average parallax calculator calculates an average screen parallax level of the 3D image by calculating a parallax level of each target pixel based on the left-eye image and the right-eye image, and averaging parallax levels in one screen. The data acquisition section detects a type of 3D image or a characteristic of synthesized image. The correcting and synthesizing section corrects the average screen parallax level depending on the type of 3D image or characteristic of synthesized image, and sets a corrected average screen parallax level as parallax to be added to a caption or OSD. The correcting and synthesizing section then adds set parallax to the caption or OSD, and synthesizes a caption or OSD with parallax. The image synthesizer superimposes the caption or OSD synthesized image with parallax, which is synthesized by the correcting and synthesizing section, on this 3D image output from the 3D image output section.

This configuration enables the image processor to correct the average screen parallax level of 3D image depending on the type of 3D image or characteristic of synthesized image, and set the corrected parallax level as parallax to be added to the caption or OSD. The image processor then adds set parallax to the caption or OSD, and synthesizes the caption or OSD with parallax. As a result, this enables reduction of viewer's sense of discomfort by a difference in depth perception between an object displayed in stereoscopic vision and the caption or OSD. In addition, the caption or OSD can be displayed appropriately depending on the type of 3D image or characteristic of synthesized image displayed.

An image processing method of the present invention includes a 3D image outputting step, an average parallax calculating step, data acquisition step, correcting step, and image synthesizing step.

The 3D image generating step is to output a 3D image with parallax between a left-eye image and a right-eye image. The average parallax calculating step is to calculate an average screen parallax level by calculating a parallax level of each target pixel based on the left-eye image and the right-eye image, and averaging parallax levels in one screen. The data acquisition step is to detect the type of 3D image or the characteristic of synthesized image. The correcting and synthesizing step is to correct the average screen parallax level depending on the type of 3D image or the characteristic of synthesized image, and set corrected parallax as parallax to be added to a caption or OSD. In the correcting step, set parallax is added to the caption or OSD to synthesize a caption or ODS with parallax. The image synthesizing step is to superimpose a caption or OSD synthesized image with parallax on the 3D image output from the 3D image output section.

### BRIEF DESCRIPTION OF DRAWINGS

Fig. 1 is a block diagram of a configuration of an image processor in a preferred embodiment of the present invention.
Fig. 2 is a block diagram of a configuration of an average parallax calculator in the preferred embodiment of the present invention.
Fig. 3A is a schematic view illustrating the operation of the average parallax calculator for calculating a parallax level of a 3D image in accordance with the preferred embodiment of the present invention.
Fig. 3B is a schematic view illustrating the operation of the average parallax calculator for calculating a parallax level of a 3D image in accordance with the preferred embodiment of the present invention.
Fig. 4 is a block diagram of a configuration of a parallax level adjuster in accordance with the preferred embodiment of the present invention.
Fig. 5 is a conceptual diagram illustrating the operation of the parallax level adjuster for calculating a parallax adjustment value in accordance with the preferred embodiment of the present invention.
Fig. 6 is a block diagram of a configuration of a parallax generator and a caption synthesizer in accordance with the preferred embodiment of the present invention.
Fig. 7A is a conceptual diagram illustrating an example of stereoscopic display of caption by the image processor in accordance with the preferred embodiment of the present invention.
Fig. 7B is a conceptual diagram illustrating an example of stereoscopic display of caption by the image processor in accordance with the preferred embodiment of the present invention.
Fig. 8 is a flow chart illustrating an image processing method in accordance with the preferred embodiment of the present invention.
Fig. 9 is a flow chart illustrating details of a correcting step in the image processing method in accordance with the preferred embodiment of the present invention.

### DETAILED DESCRIPTION OF PREFERRED EMBODIMENT

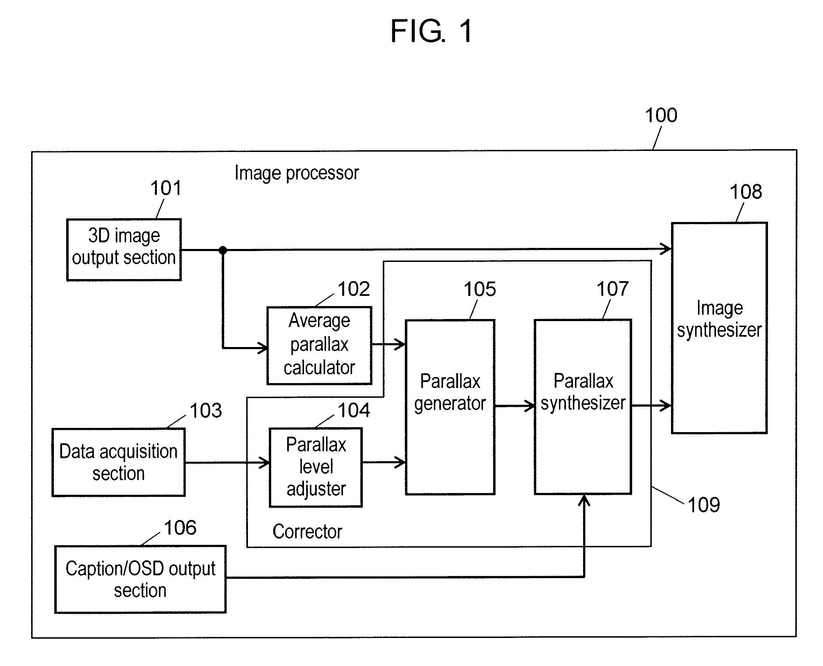

(Preferred Embodiment) Fig. 1 is a block diagram of a configuration of image processor 100 in the preferred embodiment of the present invention. Image processor 100 includes 3D image output section 101, average parallax calculator 102, data acquisition section 103, parallax level adjuster 104, parallax generator 105, caption/OSD output section 106, parallax synthesizer 107, and image synthesizer 108. Corrector 109 includes parallax level adjuster 104, parallax generator 105, and parallax synthesizer 107. The configuration and operation of each section are described below.

First, 3D image output section 101 outputs a left-eye image and a right-eye image in a 3D image. The left-eye image and the right-eye image have a certain parallax, and an image can be viewed stereoscopically using this parallax.

Next, average parallax calculator 102 calculates a parallax level of each target pixel based on the left-eye image and right-eye image in the 3D image output from 3D image output section 101. Then, average parallax calculator 102 averages calculated parallax levels in one screen to calculate an average screen parallax level. Average parallax calculator 102 may also calculate an average of parallax levels in a predetermined image area in the screen to gain the average screen parallax level, instead of calculating the average parallax level in the entire one screen. For example, in case of letter-box display or side-bar display, a predetermined image area in the screen is an area excluding a black strip area. Average parallax calculator 102 thus calculates the parallax level of each pixel in the predetermined image area in the screen as the average screen parallax level. This enables calculation of more appropriate average screen parallax level.

Next, data acquisition section 103 obtains program information and alpha blending value used typically for OSD from information added to television broadcast including data broadcast and electronic program guide (EPG). Data acquisition section 103 obtains contents information from the program information. More specifically, data acquisition section 103 detects the type of 3D image or a characteristic of synthesized image.

Contents information indicates the type of 3D image. The contents information indicates a program category, such as "news," "drama," "sports," "movie," and "animated cartoon." In other words, data acquisition section 103 detects a category of program to be displayed in stereoscopic view.

The alpha blending value is one of characteristics of synthesized image. The alpha blending value is a coefficient that determines a ratio of transparency of one image (transmittance) at synthesizing two images. In other words, data acquisition section 103 detects transmittance of 3D image.

In this preferred embodiment, as an example, data acquisition section 103 outputs the program information, including contents information, and the alpha blending value obtained to parallax level adjuster 104. Next, parallax level adjuster 104 calculates a parallax adjustment value to be added to a caption or OSD based on the program information including contents information or the alpha blending value obtained from data acquisition section 103.

Parallax generator 105 generates parallax to be added to the caption or OSD based on the average screen parallax level calculated by average parallax calculator 102 and the parallax adjustment value calculated by parallax level adjuster 104.

Next, caption/OSD output section 106 outputs a caption of package media, or a caption or OSD used typically in a television receiver. Parallax synthesizer 107 adds parallax generated by parallax generator 105 to the caption or OSD output from caption/OSD output section 106, and synthesizes (generates) a caption or OSD with parallax.

As described above, corrector 109 corrects the average screen parallax level depending on the type of 3D image or the characteristic of synthesized image, and sets this corrected level as parallax to be added to the caption or OSD. Then, this parallax is added to the caption or OSD to synthesize the caption or OSD with parallax.

Image synthesizer 108 synthesizes a 3D image output from 3D image output section 101 and the caption or OS with parallax synthesized by parallax synthesizer 107.

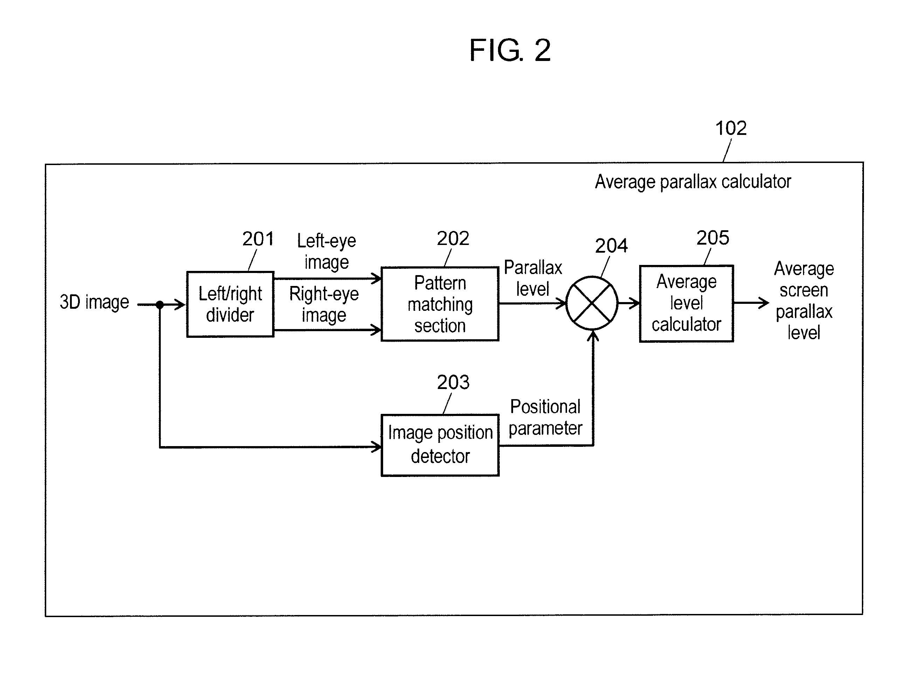

Next, average parallax calculator 102 configuring image processor 100 in Fig. 1 is detailed with reference to Fig. 2. Fig. 2 is a block diagram illustrating a configuration of average parallax calculator 102 in the preferred embodiment of the present invention. Average parallax calculator 102 includes left/right divider 201, pattern matching section 202, screen position detector 203, multiplier 204, and average level calculator 205.

First, left/right divider 201 divides the 3D image into the lefty-eye image and the right-eye image. Then, pattern matching section 202 matches horizontal pattern of the left-eye image and the right-eye image divided in above-mentioned left/right divider 201, and detects a matching point in all pixels In this way, pattern matching section 202 calculates a parallax level of each pixel based on a matched point in all detected pixels. Pattern matching section 202 then inputs this calculated parallax level to multiplier 204.

Next, image position detector 203 detects the position of target pixel on the screen. Then, detected positional parameter is input to multiplier 204.

Multiplier 204 receives the detected positional parameter and parallax level, and multiplies them. Multiplier 204 outputs this multiplication result to average level calculator 205.

Average level calculator 205 in average parallax calculator 102 calculates the average of accumulated parallax levels in one screen, and outputs this average as an average screen parallax level. As described above, average level calculator 205 calculates the average level in the entire one screen. Alternatively, only a parallax level in a predetermined image area in the screen may be calculated. For example, in case of letter-box display or side-bar display on the screen, a parallax level is calculated based on pixels only in the predetermined image area in the screen, excluding a black strip area, and this calculated level may be output as the average screen parallax level.

In addition, average level calculator 205 in average parallax calculator 102 may also give weight on the parallax level depending on screen positions. In other words, if a target pixel is near the screen center, the parallax level (distance) detected by pattern matching section 202 is accumulated as it is in average level calculator 205. On the other hand, in case of a target pixel near an edge of the screen, a caption is seldom displayed at the edge of the screen, and a viewer's point of view is also often directed to the screen center. Accordingly, if a target pixel is at near the edge of the screen, screen position detector 203 sets a positional parameter and multiplier 204 reduces the parallax level detected by pattern matching section 202 even if the parallax level is large at the screen edge.

By reducing the parallax level at the screen edge in this way, an effect of parallax level at the screen edge can be reduced when average level calculator 205 calculates the average screen parallax level. As a result, a caption with parallax displayed at the center of screen will thus not give a sense of discomfort to the viewer due to large average screen parallax level caused by parallax only at the screen edge.

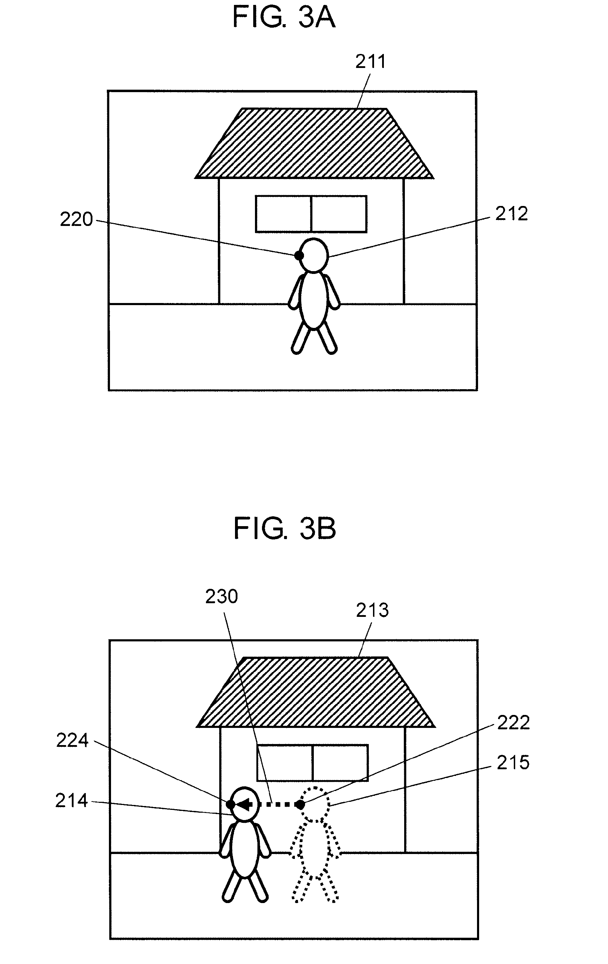

Next, the processing operation of average parallax calculator 102 is detailed with reference to Figs. 3A and 3B. Figs. 3A and 3B illustrate the operation of average parallax calculator 102 for calculating the parallax level in a 3D image in the preferred embodiment of the present invention. Fig. 3A shows the left-eye image in the 3D image, and Fig. 3B shows the right-eye image in the 3D image. Fig. 3A shows object 211 in the left-eye image, and object 212 in the left-eye image. Object 211 in the left-eye image is at the back, and object 212 in the left-eye image is to the front. Target pixel 220 is also indicated.

In the same way, Fig. 3B shows object 213 in the right-eye image, and object 214 in the right-eye image. Object 213 in the right-eye image is at the back, and object 214 in the right-eye image is to the front. Object 215 in a relative position of object 212 in the left-eye image with respect to object 214 in the right-eye image is also indicated.

Average parallax calculator 102 applies pattern matching in the sideway direction and horizontal direction with respect to one target pixel 220 in the object, so as to calculate the parallax level. For example, in case of object 212 in the left-eye image and object 214 in the right-eye image, which are the objects to the front, average parallax calculator 102 applies pattern matching in the horizontal direction from target pixel 222 in object 215. Average parallax calculator 102 then detects target pixel 224 at the left, which is a matching point in right-eye image 214. Based on this result, average parallax calculator 102 sets difference 230 in positions of target pixel 222 and target pixel 224 in the screen as the parallax level of target pixel 220.

Average parallax calculator 102 further detects the screen position. Since target pixels 220, 222, and 224 are almost at the center of the screen, set parallax level is calculated as the parallax level of target pixel 220, target pixel 222, and target pixel 224.

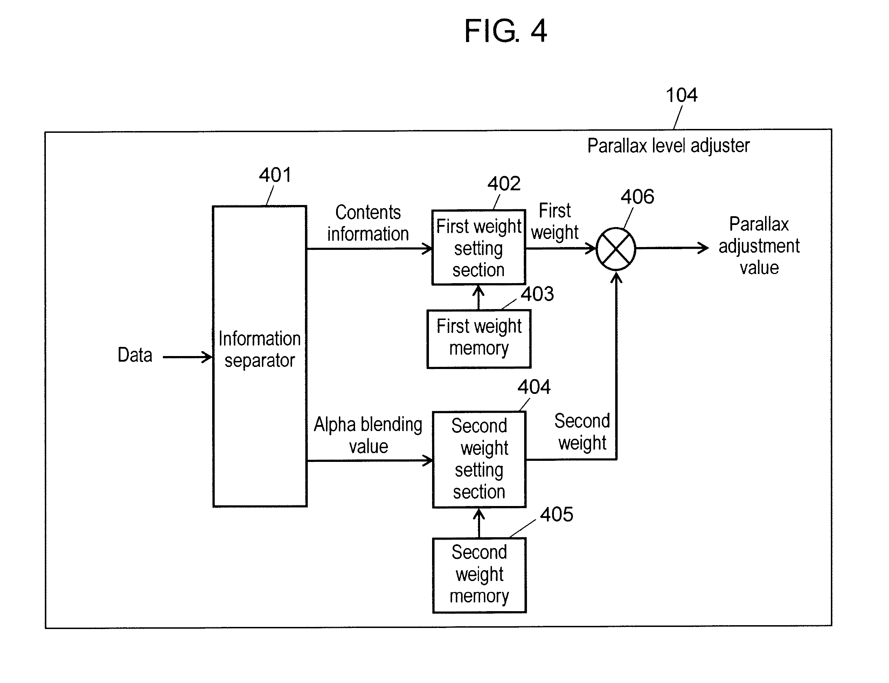

Next, parallax level adjuster 104 configuring image processor 100 in Fig. 1 is further detailed with reference to Fig. 4. Fig. 4 is a block diagram of a configuration of parallax level adjuster 104 in the preferred embodiment of the present invention. Parallax level adjuster 104 includes information separator 401, first weight setting section 402, first weight memory 403, second weight setting section 404, second weight memory 405, and multiplier 406.

First, information separator 401 extracts program contents information and an alpha blending value of OSD set in the television receiver from the data obtained by data acquisition section 103. Then, first weight setting section 402 sets the weight on contents information obtained. First weight memory 403 sets the weight on each piece of contents information that can be obtained.

In the same way, second weight setting section 404 sets the weight on the alpha blending value obtained from data acquisition section 103. Second weight memory 405 sets the weight on each alpha blending value that can be obtained.

Next, multiplier 406 multiplies the first weight set by first weight setting section 402 by the second weight set by the second weight setting section 404, and calculates a parallax adjustment value.

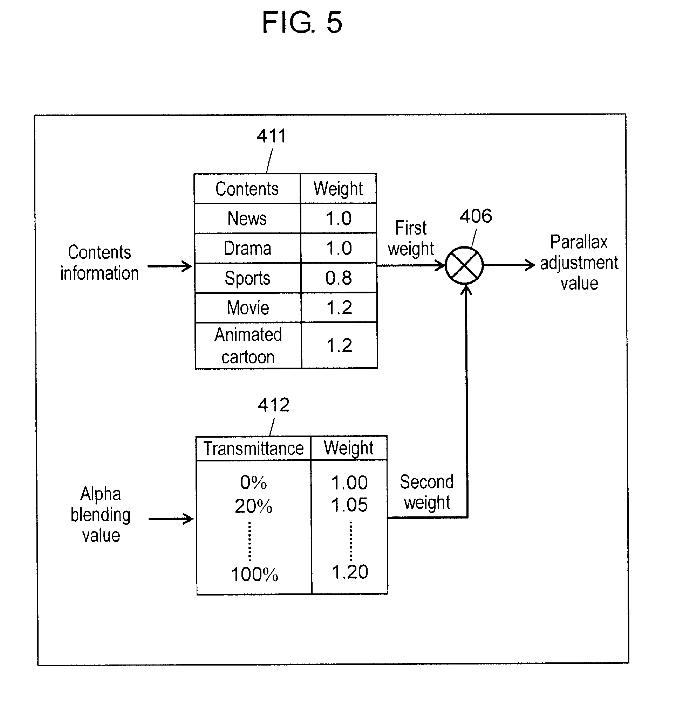

The processing operation in parallax level adjuster 104 is further detailed with reference to Fig. 5. Fig. 5 is a conceptual diagram illustrating the operation of parallax level adjuster 104 for calculating a parallax adjustment value in the preferred embodiment of the present invention. Fig. 5 indicates program contents table 411 for contents information. Program contents table 411 indicates functions of above-mentioned first weight setting section 402 and first weight memory 304. The weight on each content is stored in first weight memory 403. Weight setting section 402 sets weight on each of input program contents.

Alpha blending table 412 for alpha blending values is also indicated in Fig. 5. Alpha blending table 412 indicates functions of second weight setting section 404 and second weight memory 405. The weight on each alpha blending value is stored in second weight memory 405. Second weight setting section 404 sets the weight on each of input alpha blending values.

Parallax level adjuster 104 multiplies the weight determined by program contents table 411 by the second weight determined by alpha blending table 412 in multiplier 406 to calculate the parallax adjustment value.

Parallax level adjuster 104 calculates the parallax adjustment value that increases the parallax level as these first weight and second weight increase. On the other hand, parallax level adjuster 104 calculates the parallax adjustment value that decreases the parallax level as the first weight and the second weight decrease. In other words, image processor 100 displays an image with more stereoscopic effect if the first weight and the second weight are large. On the other hand, the image is displayed with more planar effect, compared to the case of heavy weight, if the weight is small.

Movies and animated cartoons often include images with parallax, particularly scenes with large parallax, to increase realism. Accordingly, as shown in Fig. 5, the weight on contents is given to display the caption or OSD slightly to the front with respect to an average position of caption or ODS because the viewer continues to watch the caption during movies or animated cartoons. In this way, a sense of discomfort that the caption is at a distant position relative to the 3D image can be reduced. Contrarily, the caption or OSD is displayed at the back relative to the average screen parallax in sports programs. As a result, the caption or OSD does not disturb the viewer watching the game.

For example, if the viewer watches a movie program in television broadcast, the weight on movie in program contents table 411 is set to 1.2. As a result, the first weight on contents information is set to 1.2 while watching a movie. With respect to alpha blending, OSD is not normally displayed while watching the program. Accordingly, the second weight on alpha blending value in alpha blending table 412 is set to 1.0. Then, multiplier 406 multiplies the second weight by the first weight. As a result, the parallax adjustment value while watching the movie becomes 1.2. Accordingly, OSD is displayed to the front relative to the average screen parallax.

These weights are preferably changeable depending on viewer's preference. Accordingly, the viewer may freely change the setting typically using a remote control.

As shown in Fig. 5, higher transparency results in more difficulty for the viewer to recognize OSD. In addition, a displayed image can also be seen through the back of OSD to some extent. Accordingly, a large weight is given to OSD to display at the front.

If OSD with 20% transparency is displayed, for example, the weight on OSD display in alpha blending table 412 is set to 1.05. Accordingly, the second weight on OSD information while watching is set to 1.05. A value of the second weight increases as transparency increases.

The preferred embodiment refers to OSD transparency as a characteristic of synthesized image. However, the preferred embodiment is not limited to this characteristic. For example, color of OSD may be used as characteristic of synthesized image.

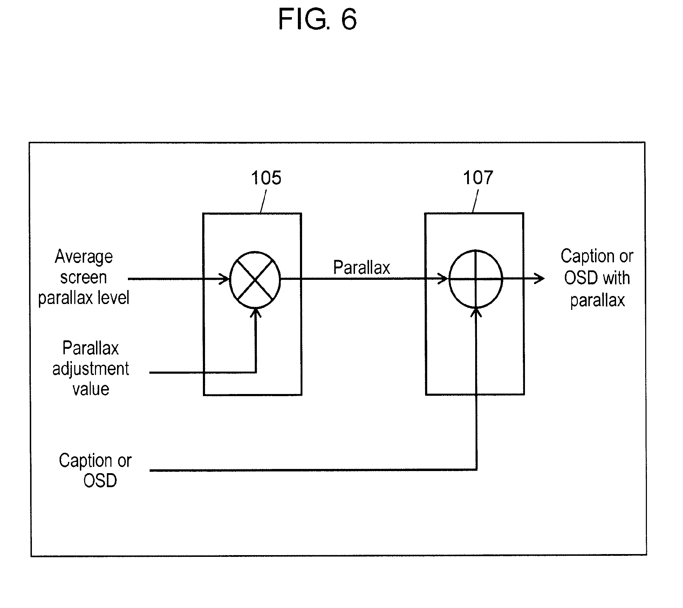

Next, parallax generator 105 and parallax synthesizer 107 in image processor 100 in Fig. 1 are further detailed with reference to Fig. 6. Fig. 6 is a block diagram of a configuration of parallax generator 105 and parallax synthesizer 107. Parallax generator 105 multiplies the average screen parallax level calculated by average parallax calculator 102 by the parallax adjustment value that is added to the caption or OSD and is calculated by parallax level adjuster 104, so as to generate parallax to be added to the caption or OSD. Parallax synthesizer 107 adds parallax generated by parallax generator 105 to the caption or OSD, and synthesizes (generates) the caption or OSD with parallax.

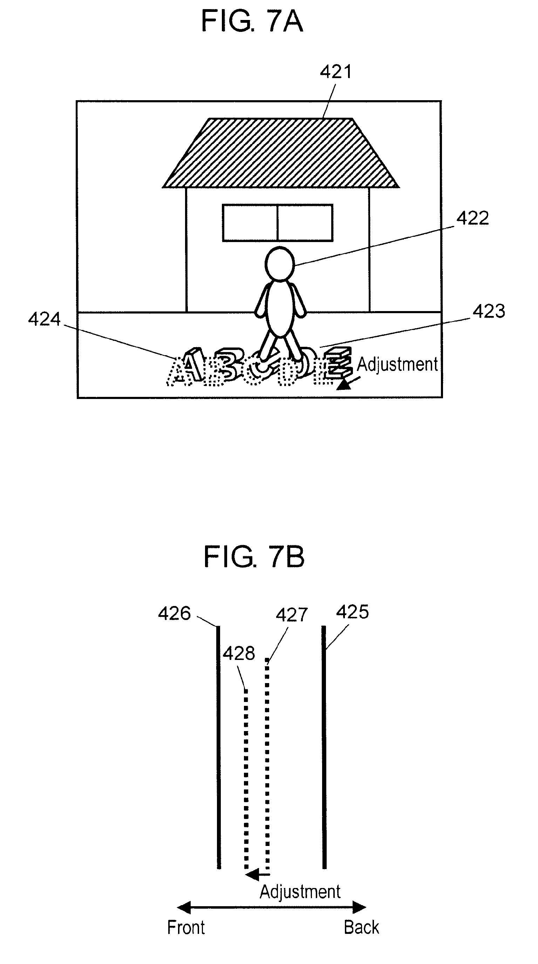

Next, the processing operation of image processor 100 with the configuration shown in Fig. 1 is described with reference to Figs. 7A and 7B. Figs. 7A and 7B are conceptual diagrams illustrating an example in which image processor 100 in the preferred embodiment of the present invention stereoscopically displays a caption. Fig. 7A shows object 421 at the back, and object 422 to the front. Fig. 7A also shows caption 423 before parallax adjustment in which the average screen parallax level is added, and caption 424 after adjusting the parallax level based on data obtained from data acquisition section 103.

Fig. 7B shows shape 425 representing the side face of object 421 at the back. Shape 426 representing the side face of object 422 to the front, shape 427 representing the side face of caption 423 before adjusting parallax, and shape 428 representing the side face of caption 424 after adjusting parallax based on data obtained by data acquisition section 103 are also illustrated in Fig. 7B.

As described above, if the viewer watches a movie in television broadcast, the parallax level of caption 427 before adjusting parallax is set such that the depth of screen of caption 427 comes to the average screen position of object 425 and object 426. Therefore, the viewer feels that the movie caption is at a distant position if object 426 to the front has large parallax. Accordingly, image processor 100 in the preferred embodiment multiplies the average screen parallax by the parallax adjustment value at watching movie, which is 1.2, to display caption 428 at a position to the front relative to the average screen position determined based on the average parallax of 3D image. OSD is also displayed in the same way.

As described above, image processor 100 in the preferred embodiment corrects the average parallax level depending on the type of 3D image or the characteristic of synthesized image. This enables generation and addition of parallax of synthesized image most appropriate for a 3D image under viewing. Accordingly, image processor 100 offers the synthesized image without giving a sense of discomfort to the viewer.

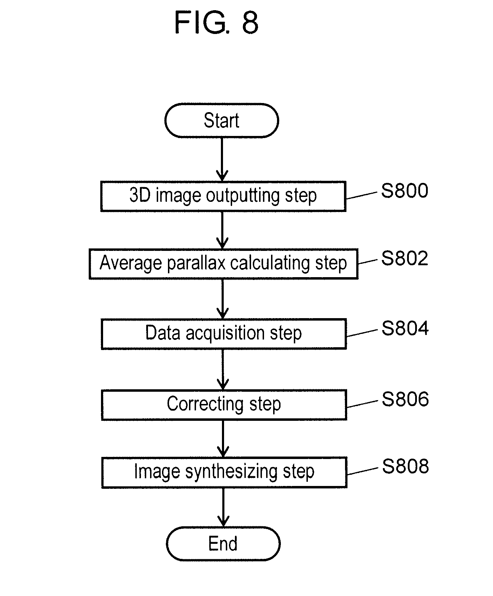

Next, an image processing method in the preferred embodiment is described. Fig. 8 is a flow chart of image processing method in the preferred embodiment of the present invention. As shown in Fig. 8, the image processing method in the preferred embodiment includes the 3D image outputting step, average parallax calculating step, data acquisition step, correcting step, and image synthesizing step.

First, in the 3D image outputting step, 3D image output section 101 outputs a 3D image by the left-eye image and the right-eye image with parallax (Step S800). Then, in the average parallax calculating step, average parallax calculator 102 calculates the parallax level of each target pixel in the 3D image based on the left-eye image and the right-eye image. Then parallax levels in one screen are averaged to calculate the average screen parallax level (Step S802). Average parallax level calculator 102 may calculate the average parallax level in the entire one screen in this way. Alternatively, the average parallax level in a predetermined image area in the screen may also be calculated as the average screen parallax level. For example, in case of letter-box display or side-bar display, the parallax level of pixels excluding the black strip area may be calculated. In other words, average parallax calculator 102 may give weight on the parallax level depending on screen positions in the average parallax calculating step.

In the data acquisition step, data acquisition section 103 detects the type of 3D image or the characteristic of synthesized image (Step S804). The type of 3D image indicates program categories such as "news," "drama," "sports," "movie," and "animated cartoon." The characteristic of synthesized image is, for example, an alpha blending value. This is a coefficient that determines ratio of transparency (transmittance) of one image in synthesizing two images.

In the correcting step, the average screen parallax level is corrected depending on the type of 3D image or the characteristic of synthesized image, and this corrected level is set as parallax to be added to the caption or OSD. Also in the correcting step, the parallax is added to the caption or OSD, and the caption or OSD with parallax is synthesized (Step S806).

In the image synthesizing step, image synthesizer 108 superimposes the caption or OSD synthesized image with parallax synthesized by parallax synthesizer 107 on the 3D image output from 3D image output section 101 (Step S808).

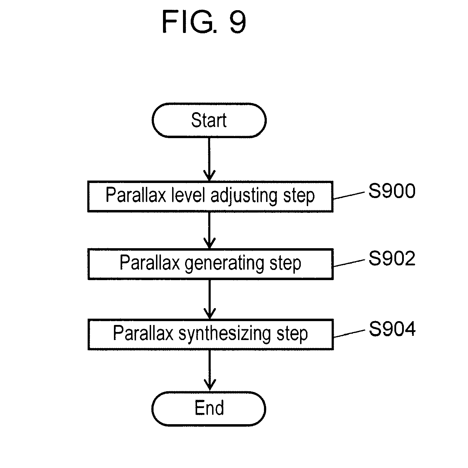

As shown in Fig. 9, the correcting step may include the parallax level adjusting step, parallax generating step, and parallax synthesizing step. Fig. 9 is a flow chart illustrating in details the correcting step of the image processing method in the preferred embodiment of the present invention. In the parallax level adjusting step, parallax level adjuster 104 calculates the parallax adjustment value based on the program information including contents information and the alpha blending value (Step S900). The contents information indicates the type of 3D image. The contents information indicates program categories such as "news," "drama," "sports," "movie," and "animated cartoon." The alpha blending value is one of characteristics of synthesized image. The alpha blending value is a coefficient that determines a ratio of transparency (transmittance) of one image at synthesizing two images.

In the parallax generating step, parallax generator 105 generates parallax to be added to the caption or OSD based on the average screen parallax level calculated by average parallax calculator 102 and the parallax adjustment value calculated by parallax level adjuster 104 (Step S902). More specifically, parallax generator 105 multiplies the average screen parallax level that is calculated by average parallax calculator 102 by the parallax adjustment value that is calculated by parallax level adjuster 104, so as to generate parallax to be added to the caption or OSD.

In the parallax synthesizing step, parallax synthesizer 107 adds the parallax generated by parallax generator 105 to the caption or OSD, and synthesizes (generates) a caption or OSD with parallax (Step S904).

As described above, the image processing method in the preferred embodiment generates and adds parallax of synthesized image most appropriate for a 3D image under viewing by correcting the average parallax level depending on the type of 3D image or the characteristic of synthesized image. Accordingly, the image processing method in the preferred embodiment can offer a synthesized image without giving any sense of discomfort to the viewer.

### INDUSTRIAL APPLICABILITY

The present invention relates to a method of displaying a caption or OSD with parallax on a 3D display unit. In particular, the present invention is effectively applicable to 3D display of tickers and OSD.

### REFERENCE MARKS IN THE DRAWINGS

- 100: Image processor
- 101: 3D image output section
- 102: Average parallax calculator
- 103: Data acquisition section
- 104: Parallax level adjuster
- 105: Parallax generator
- 106: Caption/OSD output section
- 107: Parallax synthesizer
- 108: Image synthesizer
- 109: Corrector
- 201: Left/right divider
- 202: Pattern matching section
- 203: Image position detector
- 204: Multiplier
- 205: Average level calculator
- 211: Object in left-eye image
- 212: Object in left-eye image
- 213: Object in right-eye image
- 214: Object in right-eye image
- 214: Object in left-eye image
- 220: Target pixel
- 401: Information separator
- 402: First weight setting section
- 403: First weight memory
- 404: Second weight setting section
- 405: Second weight memory
- 406: Multiplier
- 411: Program contents table
- 412: Alpha blending table
- 421: Object at the back
- 422: Object to the front
- 423: Caption before adjusting parallax
- 424: Caption after adjusting parallax

## Claims

1. An image processor comprising:
a 3D image output section for outputting a 3D image with parallax between a left-eye image and a right-eye image;
an average parallax calculator for calculating an average screen parallax level of the 3D image by calculating a parallax level of each target pixel based on the left-eye image and the right-eye image, and averaging the parallax level in one screen;
a data acquisition section for detecting a type of the 3D image or a characteristic of a synthesized image;
a correcting and synthesizing section for correcting the average screen parallax level depending on the type of the 3D image or the characteristic of the synthesized image, setting a corrected average screen parallax level as parallax to be added to a caption or an OSD, adding the parallax to the caption or the OSD, and synthesizing the caption or the OSD with parallax; and
an image synthesizer for superimposing the caption or the OSD synthesized image with parallax that is synthesized by the correcting and synthesizing section on the 3D image output from the 3D image output section.

2. The image processor of claim 1, wherein the data acquisition section detects a category of program displayed as the 3D image.

3. The image processor of claim 1, wherein the data acquisition section detects transparency of the 3D image.

4. The image processor of claim 1, the correcting and synthesizing section comprising a parallax level adjuster, a parallax generator, and a parallax synthesizer,
wherein
the parallax level adjuster calculates a parallax adjustment value from program information including contents information, or an alpha blending value;
the parallax generator generates the parallax to be added to the caption or the OSD based on the average screen parallax level calculated by the average parallax calculator, and the parallax adjustment value calculated by the parallax level adjuster; and
the parallax synthesizer synthesizes the caption or the OSD with parallax by adding the parallax generated by the parallax generator to the caption or the OSD.

5. The image processor of claim 4, wherein the data acquisition section obtains the program information from information added to television broadcast including data broadcast and an electronic program guide.

6. The image processor of claim 4, wherein the image processor displays the caption or the OSD at a position to a front of an average screen position based on the average screen parallax level of the 3D image.

7. The image processor of claim 4, wherein the average parallax calculator calculates the parallax level of each target pixel of the 3D image by horizontal pattern matching of the target pixel, and calculates the average screen parallax level by averaging the calculated parallax level in one screen.

8. The image processor of claim 4, wherein the average parallax calculator gives a weight on the parallax level depending on a screen position.

9. The image processor of claim 4, wherein the average parallax calculator calculates an average parallax level in a predetermined image area of the 3D image from the 3D image output section as the average screen parallax level.

10. An image processing method comprising:
a 3D image outputting step of outputting a 3D image with parallax between a left-eye image and a right-eye image;
an average parallax calculating step of calculating an average screen parallax level by calculating a parallax level of each target pixel based on the left-eye image and the right-eye image, and averaging the parallax level in one screen;
a data acquisition step of detecting a type of the 3D image or a characteristic of a synthesized image;
a correcting and synthesizing step of correcting the average screen parallax level depending on the type of the 3D image or the characteristic of the synthesized image, setting a corrected level as parallax to be added to a caption or an OSD, adding the parallax to the caption or the OSD, and synthesizing the caption or the OSD with parallax; and
an image synthesizing step of superimposing the caption or the OSD synthesized image with parallax on the 3D image output from the 3D image output section.

11. The image processing method of claim 10, the correcting step comprising a parallax level adjusting step, a parallax generating step, and a parallax synthesizing step;
wherein
in the parallax level adjusting step, a parallax adjustment value is calculated based on program information including contents information or an alpha blending value;
in the parallax generating step, the parallax to be added to the caption or the OSD is generated based on the average screen parallax level calculated by an average parallax calculator and the parallax adjustment value calculated by a parallax level adjuster; and
in the parallax synthesizing step, the caption or the OSD with parallax is synthesized by adding the parallax generated by a parallax generator to the caption or the OSD.

12. The image processing method of claim 10, wherein a weight is given to the parallax level depending on a screen position in the average parallax calculating step.

13. The image processing method of claim 10, wherein an average parallax level in a predetermined image area of the 3D image output from the 3D image output section is calculated as the average screen parallax level in the average parallax calculating step.
